# EUROPEAN PATENT SPECIFICATION

(11) **EP 2 635 361 B1**
(45) Date of publication and mention of the grant of the patent: **05.06.2019**
(21) Application number: 11717242.9
(22) Date of filing: 26.04.2011
(51) Int. Cl.: B01D 35/143, F25B 43/00, F25B 45/00

(54) **A METHOD TO INDICATE FILTER REPLACEMENT IN A REFRIGERANT RECOVERY AND RECHARGE DEVICE AND A REFRIGERANT RECOVERY AND RECHARGE DEVICE**
VERFAHREN ZUR ANZEIGE EINES FILTERWECHSELS BEI EINER KÜHLMITTELRÜCKGEWINNUNGS- UND FÜLLVORRICHTUNG UND EINE KÜHLMITTELRÜCKGEWINNUNGS- UND FÜLLVORRICHTUNG
PROCÉDÉ D'INDICATION DE REMPLACEMENT DE FILTRE DANS UN DISPOSITIF DE RÉCUPÉRATION ET DE RECHARGE DE FLUIDE FRIGORIGÈNE ET UN DISPOSITIF DE RÉCUPÉRATION ET DE RECHARGE DE FLUIDE FRIGORIGÈNE

(30) Priority: 15.07.2010 IN 2020CH2010
(43) Date of publication of application: 11.09.2013
(73) Proprietor: Mahle International GmbH, 70376 Stuttgart (DE)
(72) Inventor: BALIGA, Sudhir, Bangalore 560030 (IN)
(74) Representative: BRP Renaud & Partner mbB Rechtsanwälte Patentanwälte Steuerberater
(86) International application number: PCT/EP2011/056524
(87) International publication number: WO 2012/007197

(56) References cited:
- GB-A- 2 253 039
- JP-A- 2006 179 332
- US-A- 4 894 071
- US-A- 5 211 024
- US-A- 5 226 300
- US-A1- 2008 000 240

## Description

This invention relates to a method to indicate filter replacement in a refrigerant recovery and recharge and to a refrigerant recovery and recharge device as defined in appended independent claims 1 and 5.

### State of the art:

US patent publication numbered 20080000240 discloses a refrigerant filter change indication method. For the purpose of indicating that the filter d checking the life of the filter the volumetric flow of refrigerant in the filter is checked. When the amount of refrigerant flowing through the filter has crossed a certain limit it is indicated that the filter should be replaced.

### Advantages of the invention

The method to indicate filter replacement in a refrigerant recovery and recharge device according to the independent claims have the following advantages.

### Brief description of the accompany drawings:

Different modes of the invention are disclosed in detail in the description and illustrated in the accompanying drawing:
- Figure 1: illustrates a Refrigerant recovery and recharge device with various components; and
- Figure 2: illustrates a block diagram representing the devices involved in indicating filter replacement.

US 5 211 024 A discloses an apparatus for purification of a single refrigerant type, or of differing refrigerant types having differing density and moisture solubility characteristics, that includes a filter/drier unit for removing water from refrigerant passing therethrough and having a predetermined water absorption capacity. A refrigerant pump, such as a refrigerant compressor, pumps refrigerant through the filter/drier unit during recovery of refrigerant from equipment under service and/or in a separate refrigerant purification cycle. A flow meter is coupled to the filer/drier unit for measuring volumetric flow of refrigerant passing through the filter/drier unit. Volumetric flow of refrigerant through the flow meter is monitored over time for indicating to an operator when the filter/drier unit should be replaced as a function of mass of refrigerant pumped through the filter/drier unit and independent of types of refrigerant pumped through the filter/drier unit. Operation of the refrigerant pump may be inhibited upon indication that the filter/drier unit should be replaced.

### Detailed description:

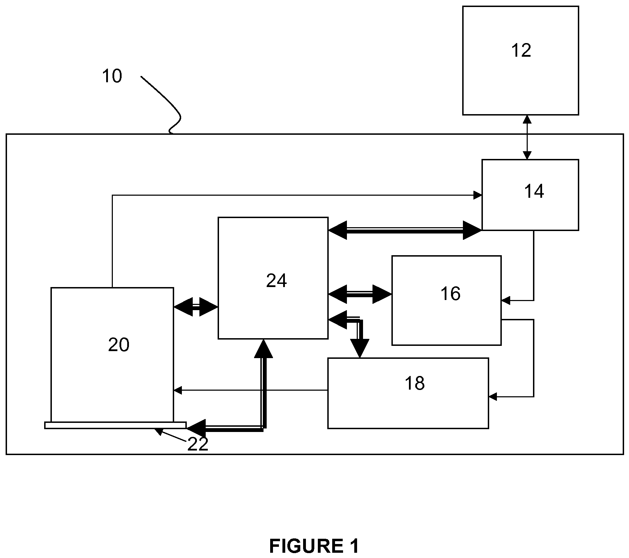

Figure 1 illustrates a refrigerant recovery and recharge device 10 with various components. While recovering and recharging refrigerant the refrigerant recovery and recharge device 10 is connected to a refrigeration equipment 12. The refrigerant recovery and recharge device 10 comprises at least a valve block 14 which establishes a connection between the refrigeration equipment 12 and the refrigerant recovery and recharge device 10. A filter 16 is present in the refrigerant recovery and recharge device 10. The filter 16 helps to trap moisture or other particulate matter which may be present in the refrigerant while recovering the refrigerant from the refrigeration equipment 12. The refrigerant then passes through a compressor 18 and is stored in a refrigerant storage tank 20. Refrigerant storage tank 20 is placed on a load cell 22 to check the weight of the refrigerant recovered. The refrigerant recovery and recharge device 10 has a controller 24 means which is used to electronically control the working of the valve block 14, the filter 16, the compressor 18 and the refrigerant storage tank 20. In figure 1 the darker connection between the controller 24 and the other components indicates that data communication takes place between the controller and the other components of the refrigerant recovery and recharge device 10.

In refrigerant recovery and recharge devices filters are employed for the removal of moisture, particulate matter and the like. The removal of moisture, particulate matter and the like is done when the refrigerant passes through the filter. After many cycles of refrigerant recovery from the refrigeration equipment it is observed that the filter becomes less effective which may be because the filter element may get saturated and non-functional. The saturation and non-functionality of the filter may result in particulate matter being conveyed to the remaining components of the refrigerant recovery and recharge device. This may in turn effect the working of those components and reduce the life of the components.

Hence there is need that the filter should be replaced periodically when the effectiveness of the filter reduces beyond a certain limit. However the filter should be randomly replaced. In certain cases it is possible that the filter element is replaced before the filter element gets saturated. This would increase the cost of working refrigerant recovery and recharge device. Thus it is essential that the filter be replaced only after a certain amount of refrigerant has passed through the filter.

In conventional devices which measure the amount of refrigerant that has passed through the filter. Volumetric flow of the refrigerant through the filter may be measured using a mass flow meter which is used to measure the volume of the refrigerant that flows through the filter. Once certain volume of the refrigerant has passed through the filter the refrigerant recovery and recharge device indicates that the filter should be replaced. The indication may be audio or visual or the like indication.

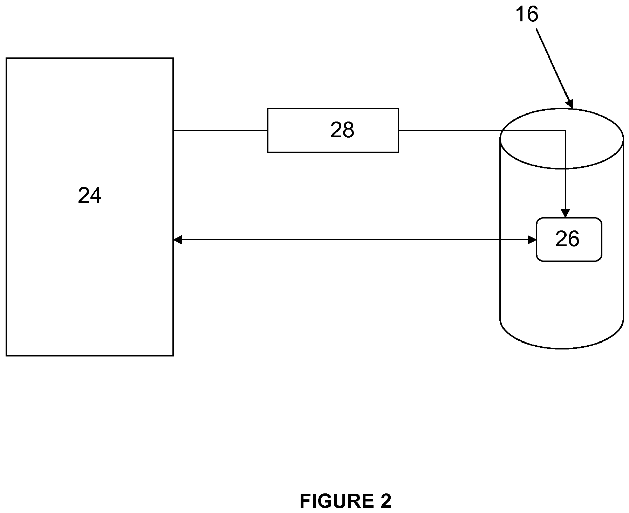

In accordance with this invention there is provided a filter for use in a refrigerant recovery and recharge device and a method for indicating that the filter should be replaced. Figure 2 illustrates a block diagram representing the devices involved in indicating filter replacement. The filter 16 comprises a fuse 26 which is used to check if the filter needs to be replaced. The controller 24 is adapted to send a signal to a fuse blow circuit 28. The fuse blow circuit 28 may be external as shown in figure 2 or may be integral part of the controller 24. The fuse blow circuit 28 renders the fuse 26 inoperative when the signal is received from the controller 24. When the fuse 26 is rendered inoperative an audio and /or visual indication indicating that the filter 16 should be replaced is provided in the refrigerant recharge and recovery device 10.

The working of the filter and the method of indicating filter replacement will be explained hereinafter. In one embodiment of the invention the amount of refrigerant that has passed through the filter 16 is determined by the weight of the refrigerant storage tank 20. A load cell 22 is normally used to measure the weight of the refrigerant that is recovered. Depending on the weight of the refrigerant recovered, the amount of refrigerant flowing through the filter 16 is monitored. If the amount of refrigerant recovered either over one cycle of recovery or many cycles of recovery is higher than a set limit, then this indication is provided to the controller in the refrigerant recovery and recharge device 10. The controller 24 in the refrigerant recovery and recharge device 10 sends a signal to the fuse blow circuit 28 to render the fuse 26 inoperative. Before continuing the recovery in the next cycle the controller 24 in the refrigerant recovery and recharge device 10 checks if the fuse 26 is intact. If the controller 24 encounters that the fuse 26 is blown out then controller 24 not only provides an indication of the same but also completely stops the working of the refrigerant recovery and recharge device 10. The indication to replace the filter may be in the form of a warning light glowing on the front panel of the refrigerant recovery and recharge device 10 with a audio beep type warning or a voice command indicating that the filter should be replaced.

The working of the refrigerant recovery and recharge device 10 is resumed only after a new filter 16 is fitted into the refrigerant recovery and recharge device 10. Even after the new filter 16 is installed in the refrigerant recovery and recharge device 10 the controller 24 checks if the fuse 26 is intact. If the fuse 26 is not intact it is an indication that the filter 16 being used does not match the requirement of the refrigerant recovery and recharge device 10 and it should be replaced. In such a case the working of the refrigerant recovery and recharge device 10 remains stopped or suspended. When the controller 24 recognizes that the fuse 26 is present it is an indication that the filter 16 being installed is new.

Thus the controller 24 not only provides an indication when the filter should be replaced but also an indication if the filter 16 being used is in proper working condition to be effective for filtering contaminants from the refrigerant.

It should be understood that the embodiment of the invention as shown in the diagram is only illustrative and does not restrict the scope of this invention. The scope is clearly defined in the claims and the specification is used to explain the working of the invention.

## Claims

1. A method to indicate filter replacement in a refrigerant recovery and recharge device (10), said method comprising the following steps:
connecting said refrigerant recovery and recharge device (10) to a refrigeration equipment (12) through a valve block (14);
recovering refrigerant from said refrigeration equipment (12), said refrigerant flowing through said filter (16) while recovery;
measuring refrigerant flowing through said filter (16) in dependence of the weight of the refrigerant recovered;
indicating that said filter needs replacement when said filter (16) is rendered inoperative by a controller (24);
**characterized in that**
- the method further comprises the step of rendering the filter (16) inoperative if amount of refrigerant recovered exceeds a limit by making a fuse (26) comprised in the filter (16) inoperative; and
- **in that** the weight of the refrigerant recovered is measured by a load cell (22).

2. The method as claimed in claim 1, wherein rendering the fuse (26) inoperative is done by a fuse blow circuit (28).

3. The method as claimed in claim 1 and 2, wherein said fuse blow circuit (28) renders said fuse (26) inoperative in dependence of a signal received from the controller (24).

4. The method as claimed in claim 1, wherein said refrigerant recovery and recharge device (10) is operative only when said inoperative filter (16) is replaced with a new filter (16) with a new fuse (26).

5. A refrigerant recovery and recharge device (10) using the method as claimed in claim 1, said device adapted to be connected to a refrigeration equipment (12), said device (10) comprising at least:
(i) a valve block (14) adapted to establish connection between the refrigerant recovery and recharge device (10) and the refrigeration equipment (12) and recover refrigerant;
(ii) a compressor (18) adapted to compress said recovered refrigerant;
(iii) a refrigerant storage tank (20) adapted to store said compressed recovered refrigerant; and
(iv) a controller (24) adapted to control the working of said valve block (14), said compressor (18) and said refrigerant storage tank (20);
said device (10) comprising a filter (16) adapted to filter said refrigerant and removal contaminants in said recovered refrigerant,
**characterized in that** said filter (16) comprises a fuse (26) adapted to indicate when the filter (16) should be replaced in dependence of the weight of the refrigerant recovered, and
**in that** said device comprises a load cell (22) adapted to measure the weight of
the refrigerant recovered from said refrigeration equipment (12) by said refrigerant recovery and recharge device (10),
wherein the controller (24) is configured to render the filter (16) inoperative by making a fuse (26) comprised in the filter (16) inoperative, if the amount of refrigerant recovered exceeds a limit.

6. The device as claimed in claim 5, wherein said device comprising a filter replacement indicator, said filter replacement indicator being a audio or visual indicator.

## Patentansprüche

1. Verfahren zur Anzeige eines Filterwechsels bei einer Kühlmittelrückgewinnungs- und Füllvorrichtung (10), wobei das Verfahren die nachstehenden Schritte umfasst:
Verbinden der Kühlmittelrückgewinnungs- und Füllvorrichtung (10) mit einer Kühlanlage (12) durch einen Ventilblock (14);
Rückgewinnung von Kühlmittel aus der Kühlanlage (12), wobei das Kühlmittel während der Rückgewinnung durch den Filter (16) fließt;
Messen des Kühlmittels, das durch den Filter (16) fließt, in Abhängigkeit vom Gewicht des zurückgewonnenen Kühlmittels;
Anzeigen, dass der Filter ausgetauscht werden muss, wenn der Filter (16) durch eine Steuerung (24) außer Betrieb gesetzt wird;
**dadurch gekennzeichnet, dass**
- das Verfahren weiter den Schritt umfasst, den Filter (16) außer Betrieb zu setzen, wenn die Menge des zurückgewonnenen Kühlmittels eine Grenze überschreitet, indem eine Sicherung (26), die in dem Filter (16) enthalten ist, außer Betrieb gesetzt wird; und
- dass das Gewicht des zurückgewonnenen Kühlmittels durch eine Wägezelle (22) gemessen wird.

2. Verfahren nach Anspruch 1, wobei die Außerbetriebnahme der Sicherung (26) durch eine Sicherungstrennschaltung (28) erfolgt.

3. Verfahren nach Anspruch 1 und 2, wobei die Sicherungstrennschaltung (28) die Sicherung (26) in Abhängigkeit von einem von der Steuerung (24) empfangenen Signal außer Betrieb setzt.

4. Verfahren nach Anspruch 1, wobei die Kühlmittelrückgewinnungs- und Füllvorrichtung (10) nur dann wirksam ist, wenn der inaktive Filter (16) durch einen neuen Filter (16) mit einer neuen Sicherung (26) ersetzt wird.

5. Kühlmittelrückgewinnungs- und Füllvorrichtung (10) unter Verwendung des in Anspruch 1 genannten Verfahrens, wobei die Vorrichtung zum Anschluss an eine Kühlanlage (12) geeignet ist, wobei die Vorrichtung (10) mindestens umfasst:
(i) einen Ventilblock (14), der geeignet ist, eine Verbindung zwischen der Kühlmittelrückgewinnungs- und Füllvorrichtung (10) und der Kühlanlage (12) herzustellen und Kühlmittel zurückzugewinnen;
(ii) einen Verdichter (18), der geeignet ist, das zurückgewonnene Kühlmittel zu verdichten;
(iii) einen Kühlmittelspeichertank (20), der geeignet ist, das komprimierte zurückgewonnene Kühlmittel zu speichern; und
(iv) eine Steuerung (24), die angepasst ist, um die Funktion des Ventilblocks (14), des Verdichters (18) und des Kühlmittelspeichertanks (20) zu steuern;
wobei die Vorrichtung (10) einen Filter (16) umfasst, der zum Filtern des Kühlmittels und zur Entfernung von Verunreinigungen in dem zurückgewonnenen Kühlmittel angepasst ist,
**dadurch gekennzeichnet, dass** der Filter (16) eine Sicherung (26) umfasst, die geeignet ist, anzuzeigen, wann der Filter (16) in Abhängigkeit vom Gewicht des zurückgewonnenen Kühlmittels ausgetauscht werden sollte, und
dass die Vorrichtung eine Wägezelle (22) umfasst, die geeignet ist, das Gewicht des aus der Kühlanlage (12) durch die Kühlmittelrückgewinnungs- und Füllvorrichtung (10) zurückgewonnenen Kühlmittels zu messen,
wobei die Steuerung (24) konfiguriert ist, den Filter (16) außer Betrieb zu setzen, indem sie eine Sicherung (26), die in dem Filter (16) enthalten ist, außer Betrieb setzt, wenn die Menge des zurückgewonnenen Kühlmittels einen Grenzwert überschreitet.

6. Vorrichtung nach Anspruch 5, wobei die Vorrichtung eine Filterwechselanzeige umfasst, wobei die Filterwechselanzeige eine akustische oder optische Anzeige ist.

## Revendications

1. Procédé d'indication de remplacement de filtre dans un dispositif de récupération et de recharge de réfrigérant (10), ledit procédé comprenant les étapes suivantes consistant à :
raccorder ledit dispositif de récupération et de recharge de réfrigérant (10) à un équipement de réfrigération (12) à travers un chapeau de soupape (14) ;
récupérer le réfrigérant dudit équipement de réfrigération (12), ledit réfrigérant s'écoulant à travers ledit filtre (16) en cours de récupération ;
mesurer le réfrigérant s'écoulant à travers ledit filtre (16) en fonction du poids du réfrigérant récupéré ;
indiquer que ledit filtre a besoin d'un remplacement lorsque ledit filtre (16) est rendu inopérant par un dispositif de commande (24) ;
**caractérisé en ce que** :
- le procédé comprend en outre l'étape visant à rendre le filtre (16) inopérant si la quantité de réfrigérant récupérée dépasse une limite en rendant inopérant un fusible (26) compris dans le filtre (16) ; et
- le poids du réfrigérant récupérée est mesuré par une cellule de charge (22).

2. Procédé selon la revendication 1, dans lequel on rend le fusible (26) inopérant au moyen d'un circuit de claquage de fusible (28).

3. Procédé selon les revendications 1 et 2, dans lequel ledit circuit de claquage de fusible (28) rend ledit fusible (26) inopérant à la suite d'un signal reçu du dispositif de commande (24).

4. Procédé selon la revendication 1, dans lequel ledit dispositif de récupération et de recharge de réfrigérant (10) n'est opérant que lorsque ledit filtre inopérant (16) est remplacé par un nouveau filtre (16) avec un nouveau fusible (26).

5. Dispositif de récupération et de recharge de réfrigérant (10) utilisant le procédé selon la revendication 1, ledit dispositif étant à même d'être raccordé à l'équipement de réfrigération (12), ledit dispositif (10) comprenant au moins :
(i) un chapeau de soupape (14) qui est à même d'établir une liaison entre le dispositif de récupération et de recharge de réfrigérant (10) et l'équipement de réfrigération (12) et de récupérer le réfrigérant ;
(ii) un compresseur (18) qui est à même de comprimer ledit réfrigérant récupéré ;
(iii) un réservoir de stockage de réfrigérant (20) qui est à même de stocker ledit réfrigérant récupéré comprimé ; et
(iv) un dispositif de commande (24) qui est à même de commander le fonctionnement du chapeau de soupape (14), dudit compresseur (18) et dudit réservoir de stockage de réfrigérant (20) ;
ledit (10) comprenant un filtre (16) qui est à même de filtrer ledit réfrigérant et de retirer les contaminants dans ledit réfrigérant récupéré,
**caractérisé en ce que** :
ledit filtre (16) comprend un fusible (26) qui est à même d'indiquer lorsque le filtre (16) doit être remplacé en fonction du poids du réfrigérant récupéré et
ledit dispositif comprend une cellule de charge (22) qui est à même de mesurer le poids du réfrigérant récupéré dudit équipement de réfrigération (12) par ledit dispositif de récupération et de recharge de réfrigérant (10),
dans lequel le dispositif de commande (24) est configuré pour rendre le filtre (16) inopérant en rendant un fusible (26) compris dans le filtre (16) inopérant si la quantité de réfrigérant récupérée dépasse une limite.

6. Dispositif selon la revendication 5, dans lequel ledit dispositif comprend un indicateur de remplacement de filtre, ledit indicateur de remplacement de filtre étant un indicateur audio ou visuel.
